# EUROPEAN PATENT APPLICATION

(11) **EP 4 613 935 A2**
(43) Date of publication of application: **10.09.2025**
(21) Application number: 25154081.1
(22) Date of filing: 27.01.2025
(51) Int. Cl.: E01H 1/08

(54) **SWEEPING MACHINE**

(30) Priority: 16.02.2024 IT 202400003289
(71) Applicant: Tenax International S.r.l., 42010 Rio Saliceto (RE) (IT)
(72) Inventor: Guareschi Geddes da Filicaia, Vincenzo, Parma (IT)
(74) Representative: Lunati & Mazzoni S.r.L.

(57) **Abstract**

A sweeping machine (1) comprising a vehicle (2) defining a longitudinal axis (2a) parallel to the direction of travel of the vehicle (2) on the ground and comprising at least a supporting frame (20), motion means (21) constrained unstably to the frame (20) and configured to drive the motion of the vehicle (2) with respect to the ground, a sweeping system (3) connected to the frame (20), suitable to move waste present on the ground and comprising: at least a sweeping element (30) suitable to move waste from the ground and defining a reference position (3a) with respect to the frame (20), at least a connecting arm (31) for each sweeping element (30) suitable to connect each sweeping element (30) to the vehicle (2), a waste collection system (4) integral to the frame (20) and placed near the sweeping system (3), a waste containment chamber (5) connected to the collection system (4) and suitable to contain waste, the sweeping system (3) further comprising at least a pneumatic actuator (32) controlled electronically, suitable to move each sweeping element (30) so as to modify the reference position (3a) with respect to the frame (20), and constituting at least part of each arm (31) so as to be able to modify the extension of the arm (31).

## Description

The present invention relates to a sweeping machine of the type specified in the preamble of the first claim.

The present invention relates to a sweeping machine which can be applied in the maintenance of roads and rolling spaces and in particular for cleaning the roads.

Currently, road sweeping machines are known, that is vehicles suitable to remove waste and debris lying on the road surface and which can constitute a potential danger to road safety, apart from a negative impact on the aesthetics of city streets. Typically the road sweeping machines are vehicles equipped with a cockpit for driving by an operator and they exploit waste sweeping and collection systems which are connected to the vehicle itself.

The sweeping systems are plants consisting of brushes connected by mechanical arms to the vehicle, control systems which exploit actuators, a system for sucking the waste collected along the path of the vehicle and an internal collection chamber in which the collected waste is inserted.

In particular, the known sweeping systems exploit hydraulic actuators, for moving the arms thereto the sweeping elements are connected.

The described known art comprises some important drawbacks.

In particular, the hydraulic actuators do not allow an adequate motion in relation to some types of motion of the sweeping elements which would make the sweeping system more efficient, such as for example the floating motion.

In the hydraulic actuators the anti-collision and safety systems for the operators are not very efficient.

Another drawback of the hydraulic actuators is that in case of breakage they can release polluting substances in the environment.

The known art, moreover, has the disadvantage of a complex maintenance.

In this situation the technical task underlying the present invention is to devise a sweeping machine capable of substantially obviating at least partially the mentioned drawbacks.

Within said technical task an important object of the invention is to obtain a sweeping machine wherein the sweeping system could be moved with floating motions. Another important object of the invention is to implement a sweeping machine wherein the sweeping system does not involve risks for the environment in case of damages.

An additional object of the invention is to implement a sweeping machine wherein the sweeping system has anti-collision systems improving the safety conditions for the operators.

Another important object of the invention is to reduce the complexity and the installation and maintenance costs of the sweeping system.

At last, another advantage of the invention is to improve the stabilization of the loads and their distribution in the means in order not to alter the horizontal position thereof. The technical task and the specified objects are achieved by a sweeping machine as claimed in the enclosed claim 1.

Preferred technical solutions are highlighted in the depending claims.

The features and the advantages of the invention are explained hereinafter by the detailed description of preferred embodiments of the invention, with reference to the enclosed drawings, wherein:

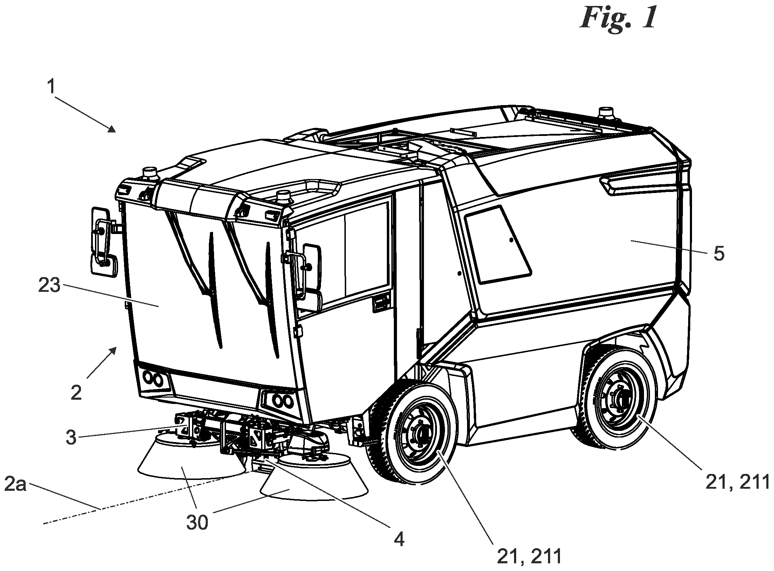

**Figure 1** shows a sweeping machine according to the invention;

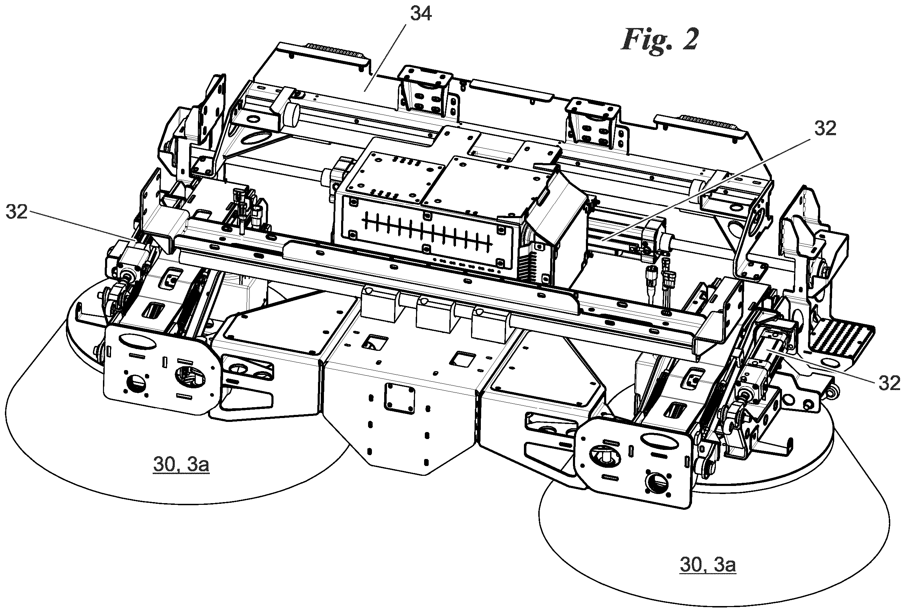

**Figure 2** shows a view of the sweeping system of a sweeping machine according to the invention;

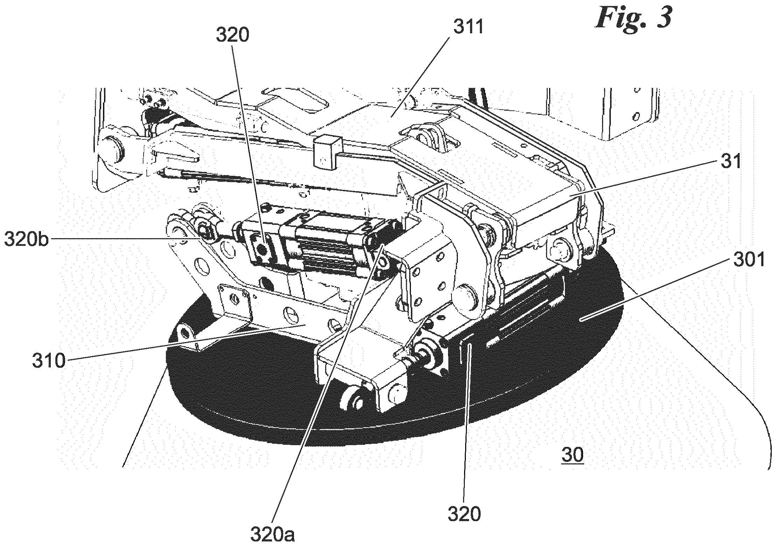

**Figure 3** shows a first detail of the sweeping system of a sweeping machine according to the invention;

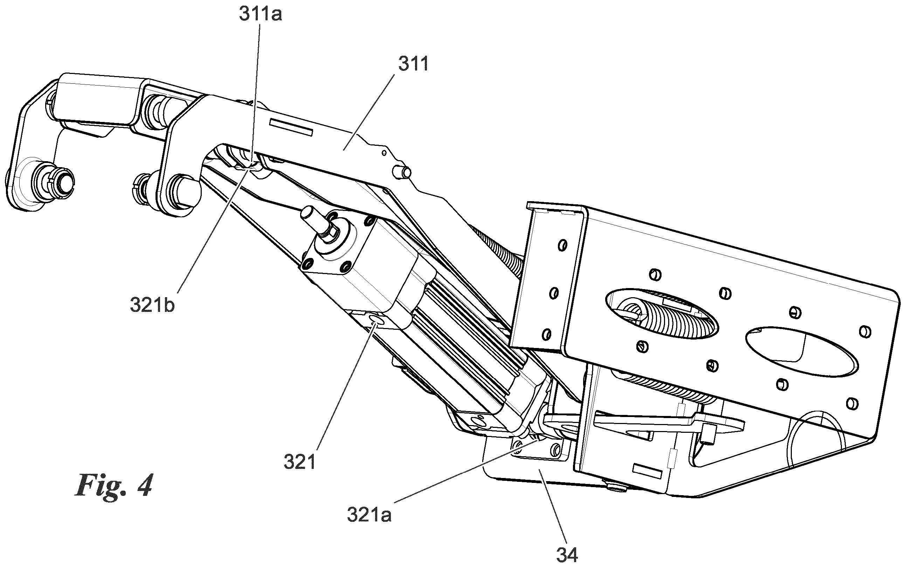

**Figure 4** shows a second detail of the sweeping system of a sweeping machine according to the invention;

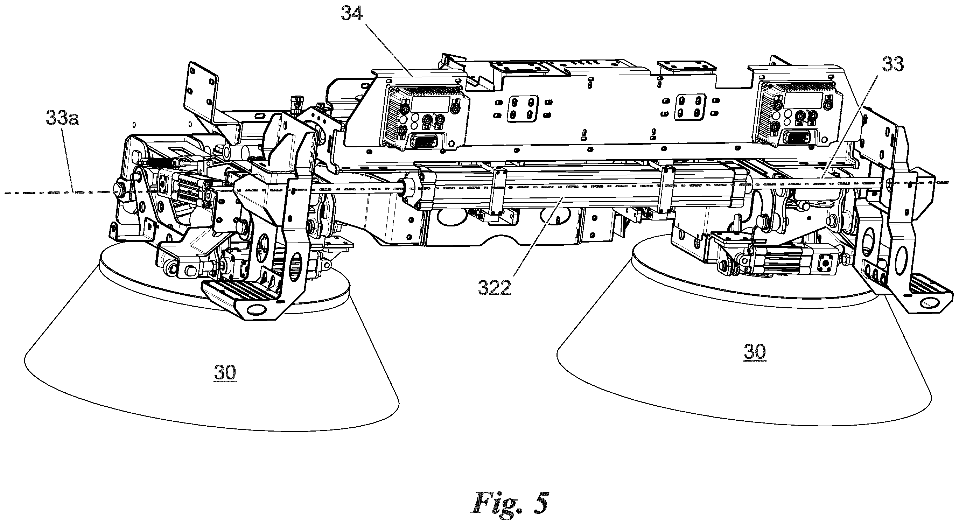

**Figure 5** shows a third detail of the sweeping system of a sweeping machine according to the invention;

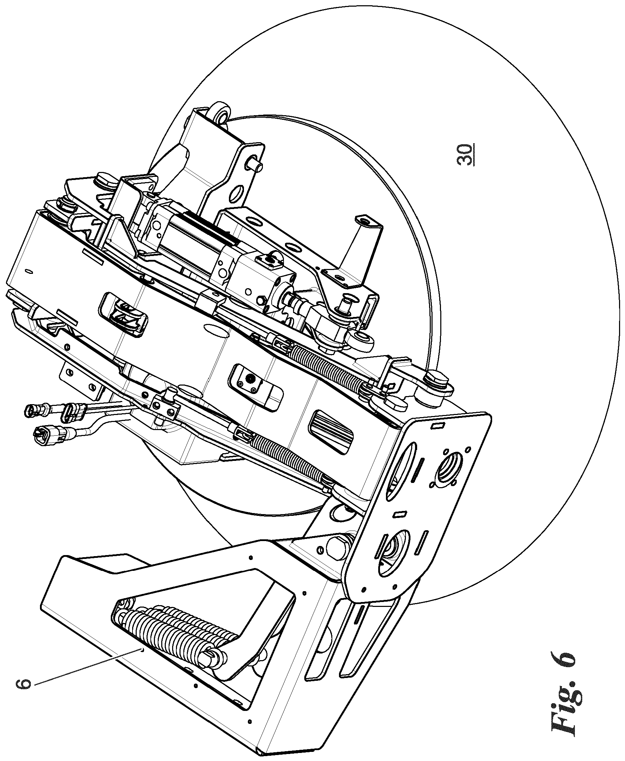

**Figure 6** shows a portion of a sweeping machine according to the invention;

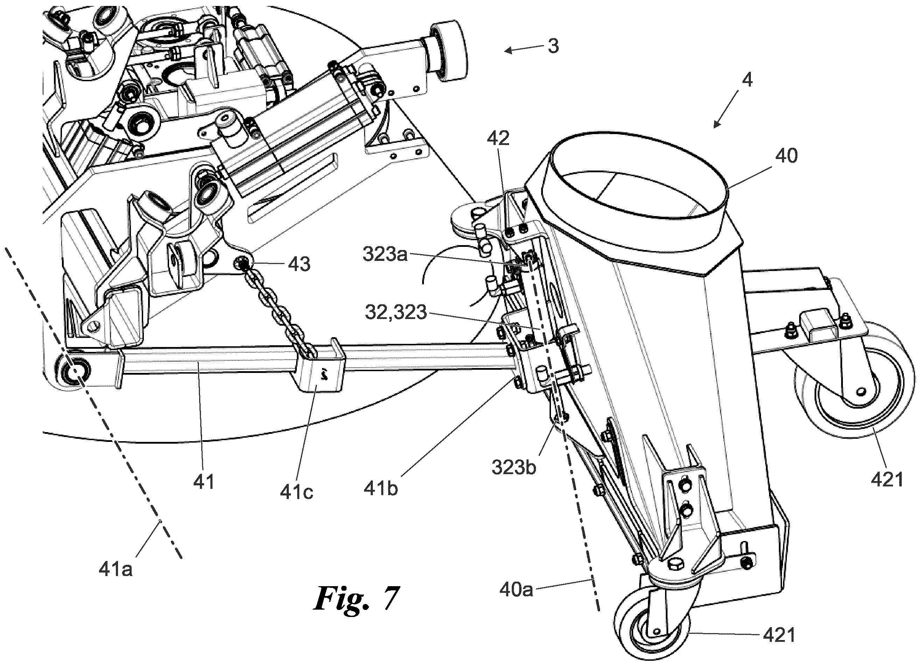

**Figure 7** shows a part of the waste sucking system of a sweeping machine according to the invention; and

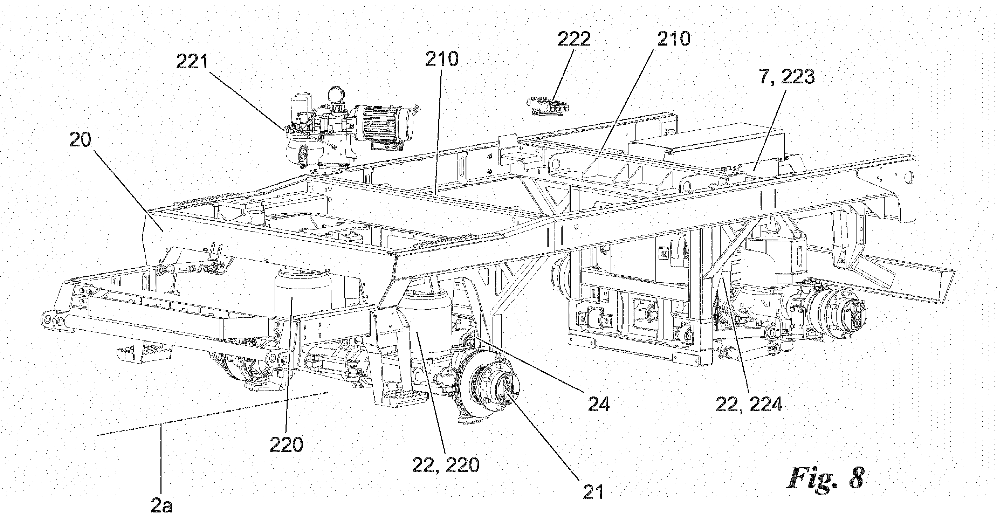

**Figure 8** shows a top view of the frame of a sweeping machine according to the invention.

In the present document, the measurements, values, shapes and geometrical references (such as perpendicularity and parallelism), when associated to words such as "about" or other similar terms such as "approximately" or "substantially", are to be meant as excluding measurements errors or inaccuracies due to production and/or manufacturing errors and, above all, excluding a slight deviation from the value, measurement, shape or geometrical reference thereto it is associated. For example, such terms, if associated to a value, preferably designate a deviation not higher than 10% of the value itself.

Moreover, when used, terms such as "first", "second", "higher", "lower", "main" and "secondary" do not identify necessarily an order, a relation priority or relative position, but they can be simply used to distinguish more clearly components different from each other.

Unless otherwise specified, as it results from the following discussions, it is considered that terms such as "treatment", "computer science", "determination", "calculation", or the like, relate to the action and/or processes of a computer or similar electronic calculation device which manipulates and/or transforms data represented as physical data, such as electronic quantities of registers of a computer system and/or memories into other data similarly represented as physical quantities within computer systems, registers or other devices for storing, transmitting or displaying information.

The measurements and data reported in the present text are to be considered, unless otherwise indicated, as performed under International Standard Atmosphere ICAO (ISO 2533:1975).

With reference to the Figures, the sweeping machine according to the invention is designated as a whole with number **1.**

The sweeping machine 1 comprises a vehicle **2** defining a longitudinal axis **2a** parallel to the direction of travel of the vehicle 2.

The vehicle 2 is a motorized means of transport suitable for road use or alternatively for use in external private, for example domestic or working, environments.

The vehicle 2 preferably comprises a cockpit **23** suitable to contain an operator's driving position.

The driving position, apart from the commands of known type for driving the vehicle 2, preferably comprises the commands for adjusting the equipment suitable to clean the ground.

In particular, the sweeping machine 1 is typically a road vehicle suitable to remove waste deposited on the city ground.

The vehicle 2 comprises at least a supporting frame **20.** The frame 20 is of known type and it is suitable to sustain the loads and support the structure of the sweeping machine 1.

The vehicle 2, apart from the frame 20, comprises at least motion means **21.**

The motion means 21 is configured to drive the motion of the vehicle 2 with respect to the ground.

In particular, in the sweeping machine 1 the motion means 21 comprises at least two axles **210.**

### Suspension group

The axles 210, as it is known, are mechanical members suitable to move the vehicle 2. Each axle, in fact, is connected to the frame 20 and includes two wheels **211.** The vehicle 2 preferably further comprises a plurality of suspensions **22.**

The plurality of suspensions 22 can include, partially or completely, self-levelling pneumatic suspensions. They can advantageously comprise air springs **220.** They perform the function of creating an air bearing which allows to adjust the extension of the suspensions 22. In this way, it is possible to adjust the position of the frame 20 with respect to the reference position. Each one of the air springs 220 can be in fluid passage connection with a compressor **221.** It can be a screw volumetric compressor. In this way, the air pressure inside the air springs 220 can be adjusted, in terms of entry and exit of air. The adjustment can be performed by valves. On this regard, the air springs 220 preferably comprise electrovalves **222.** They adjust the entry and exit of air from each one of the air springs 220. Moreover, they allow the entry and exit of air by electric actuation. Therefore, the electrovalves 222 can put in fluid passage connection each one of the air springs 220 with the compressor 221.

Each one of the suspensions 22 can be functionally connected to a respective wheel 211, in this case, preferably, each suspension 22 is arranged between the frame 20 and the axle 210. More in detail, the suspension 22 is configured to reduce the transmission of vibrations, deriving from the motion of the vehicle 2, transmitted by the axles 210 to the frame 20. On this regard, the suspensions 22 can comprise hydraulic shock absorbers **224.**

The suspensions 22 can be further configured to make that the frame 20 keeps the same distance from the ground. On this regard, the distance value of the frame 20 from the ground can be determined so that, when a position sensor detects a distance value different from the predetermined value, the suspensions 22 vary the distance so that it reaches the predetermined value.

The plurality of suspensions 22 preferably comprises angular position sensors **24.** They are sensors configured to measure the slope of the frame 20 with respect to the ground. For example, the angular sensors 24 can measure the value of an angle comprised between the plane in which the axles 210 and the ground lie. The plurality of suspensions 22 is preferably further configured to vary the slope in response to the measured value of the slope so that the measured value varies until the predetermined value. For example, the predetermined value of the slope can be 0°, if one wants to keep the plane of the axles 210 parallel to the ground.

The variation in the distance of the frame 20 from the ground or its slope with respect to the ground can be performed by adjusting the air pressure contained inside the air springs, as described previously.

The suspensions 22 can comprise an electronic control unit **223.** It can be operatively connected at least to the electrovalves 22, so as to adjust the actuation thereof depending upon the air pressure required inside each one of the air springs 220. The electronic control unit 223 advantageously can be functionally connected to the angular sensors 24. In this way, the slope can be varied until the predetermined slope value.

In detail, the air pressure value can be different in each one of the air springs 220. In this way, the slope of the frame 20 with respect to the ground can be varied depending upon the operating conditions in which there is the vehicle 1 and the ground irregularities.

The electronic control unit 223 can adjust the value of the slope of the plane of the axles with respect to the ground in response to the angular value measured on the single air springs 220. Therefore, the electronic control unit 223 can vary in a differentiated way for each one of the air springs 220 the air pressure value so as to make the slope of the plane of the axles to vary until the predetermined value. Therefore, the electronic control unit 223 can actuate the compressor 221 and the electrovalves 222 of the air springs 220 for which the air pressure is varied.

This differentiated variation can also be performed automatically, in automatic mode, by setting the predetermined values. The electronic control unit 223 can perform also a processing of parameters such as the weight of the vehicle 2 or of the volume occupied of the tanks for fuel or water, so as to adjust even the distance from the ground of the frame 20 in response to the variation in the parameters measured by the sensors, so as to vary the value of the distance of the frame 20 from ground until the distance value coincides with the predetermined value.

The adjustment of the air pressure of the air springs 220 can be performed on the single springs or on the springs connected to the same axle 210.

The activation of the compressor 221 and of the electrovalves 222, generally, can be controlled manually by an operator by control means.

Therefore, the pneumatic suspensions 22 have the advantage of allowing a differentiated stabilization of the loads weighing on the anterior and posterior axles 210, depending upon the loading or unloading procedures which are performed.

### Sweeping group

The sweeping machine 1 comprises a sweeping system **3.** The sweeping system 3 is preferably operatively connected to the frame 20. The sweeping system 3 is suitable to remove the waste present on the ground; therefore, it comprises at least a sweeping element **30** suitable to move waste from the ground and defining a reference position **3a** with respect to the frame 20. Under reference position 3a the position of a fixed point, detected on the sweeping element 30 with respect to a fixed reference system detected on the frame 20, is substantially meant. For example, as fixed point the rotation centre of the sweeping element 30, or its centre of gravity, can be considered and as fixed reference system detected on the frame 20 the hooking area of the sweeping system 3 relatively to said frame 20 can be considered.

The sweeping element 30 is typically a movable brush, connected to a motion system. The movable brush can be rotating with respect to an axis perpendicular to the ground, or with respect to an axis parallel to the ground, if the configuration comprises rotating brushes arranged in one or more rollers on which the brushes are housed. In both cases, for example both axes can pass through the previously mentioned centre of rotation. Alternatively to the rotating brushes, the sweeping element 30 can comprise a brush having fixed bristles arranged perpendicularly to the ground and joined to an upper plane parallel to the ground.

In particular, in the configuration with brushes rotating around an axis perpendicular to the ground, the rotary motion makes that the waste is conveyed towards the internal portion below the vehicle 2 so as to bring the waste in an area below the vehicle 2. The sweeping element 30, generally, can be moved so as to combine the sweeping due to the rotation motion at least with the translational one. Then, the motion of the sweeping elements 30 allows to optimize the sweeping process and to make it more efficient depending upon the road conditions and the type of met waste.

The motion of the sweeping elements 30 is performed by means of suitable mechanical systems.

On this regard, the sweeping system 3 comprises at least an arm **31.** The arm 31 performs a connecting function for at least a sweeping element 30. The arm 31 is suitable to connect the sweeping element 30 to the vehicle 2, in particular to the frame 20. The sweeping system 3, as already mentioned, can comprise a plurality of sweeping elements 30. In this case, one single arm 31 can connect all mutually integral sweeping elements 30 to the frame 20 or the sweeping system 3 can comprise a plurality of arms 31, each one thereof connecting a relative sweeping element 30 to the frame 20.

The sweeping system 3 further comprises advantageously at least a pneumatic actuator **32.** The pneumatic actuator 32 can be a single-rod or a through-rod cylinder of the known type and then it preferably exploits the air as operating fluid. The pneumatic actuator 32 is preferably suitable to move each sweeping element 30 so as to modify the reference position 3a with respect to the frame 20. In particular, the pneumatic actuator 32 constitutes at least part of an arm 31. In this way it is possible to modify the extension of the arm 31 or the orientation thereof. This solution has the advantage of facilitating maintenance, installation and improving the safety conditions in case of damages to the vehicle 2. Moreover, the presence of pneumatic actuators 32 makes that the vehicle 2 comprises fewer components comprising oil, with consequent advantages for the environment.

The pneumatic actuator 32 substantially implements the motion of at least a sweeping element 30.

The arm 31 preferably defines a proximal portion **311.** It is the portion of arm 31 connected to the vehicle 2. In particular, the proximal portion 311 can be hinged to a hooking portion **34.** It can be a portion of the sweeping system 3 operatively connected to the frame 20. In particular, it can be moved with respect to the frame 20.

In some embodiment examples, the proximal portion 311 can be hinged so as to implement a relative rotation of the proximal portion 311 with respect to the frame 20 around an axis parallel to the ground.

The arm 31 preferably comprises a distal portion **310.** It is the portion hinged to the proximal portion 311. It is hinged integrally at least to a sweeping element 30. In this way, the sweeping element 30 can be moved so as to vary its slope with respect to the ground, by the hinge which constraints the proximal portion 311 and the distal portion 311.

Advantageously, the arm 31 preferably comprises a plurality of pneumatic actuators 32. They preferably comprise at least a first pneumatic actuator **320.** It is constrained to the distal portion 310. In particular, the first actuator 320 is configured to vary the slope of at least a sweeping element 30 with respect to a direction transversal to the longitudinal axis 2a.

In some embodiments of the sweeping machine 1, the arm 31 can comprise two first actuators 320 perpendicular to each other. In these embodiments, the proximal portion 311 and the distal portion 310 can be hinged with respect to two axes perpendicular to each other, so as to be able to vary the slope of the sweeping element 30 with respect to said axes.

In detail, the first actuators 320 can include air cylinders. In particular, the first actuators 320 can comprise single-rod cylinders. The single-rod cylinder is a type of pneumatic cylinder consisting of a rod capable of sliding inside an airtight chamber and connected to an internal wall which defines and separates two spaces inside said chamber; the rod is integral to the internal wall and the variation in the volumes of air, contained in the two internal spaces separated by the internal wall, with consequent air pressure variation, moves the rod; the rod motion in a direction or in the opposite direction can be controlled by the introduction of air in an internal space and the emission of air from the other internal space. The introduction and the emission of air can be controlled in one direction or in the opposite direction to move the rod in one direction or in the other one. The introduction of air can be controlled mechanically or electrically.

The first actuators 320 preferably define a first end **320a** and a second end **320b** opposite to the first end 320a. The first end 320a can be hinged to the proximal portion 311. The second end 320b can be hinged to the distal portion 310. In this way, the lengthening or the shortening of the cylinder implements the rotation motion of the sweeping element 30 around the corresponding axis.

The combination of two first actuators 320 oriented perpendicularly to each other makes that it could be possible to implement a rotation of the sweeping element 30 around two mutually perpendicular rotation axes. For example, the two rotation motions can define a pitch and a roll of the sweeping element 30, respectively, with respect to the longitudinal axis 2a.

Generally, the combination of two or more first actuators 320 makes that the sweeping element 30 could be rotated with respect to different and mutually transversal axes.

In particular, in some embodiments of the sweeping machine 1, the first actuators in form of single-rod cylinders can be placed with respect to the sweeping element 30 so as to be mutually perpendicular and wherein one of the single-rod cylinders is arranged along a connection portion **301** between the sweeping element and the distal portion 310. The connection portion 301 is the fixed portion of the sweeping element 30 with respect to the movable part. This arrangement of the single-rod cylinders makes that the motion of the sweeping element 30 is performed with a rotation arm which advantageously allows to reduce the stresses acting on the rods in case of collisions.

Advantageously, in the sweeping machine 1 at least a pneumatic actuator 32 preferably comprises a second actuator **321** developing transversally to the ground. The second actuator 321 is preferably configured to vary the reference position 3a with respect to the frame 20 transversally to the ground so as to adjust the distance of at least a sweeping element 30 with respect to the ground.

The second actuator 321 has the advantage of adapting the sweeping action to the irregularities of the ground, since it allows to lift the sweeping elements 30 and to bring them at a distance, established by the operator, from the ground.

In particular, the proximal portion 311 can advantageously comprise preferably the second actuator 321.

In some embodiments of the sweeping machine 1, the proximal portion 311 can be hinged to the hooking portion 34 so as to be able to implement a rotation motion which allows the arm 31 to vary the distance of the sweeping element 30 with respect to the ground.

On this regard, the second actuator 321 can comprise, for example, an air cylinder. It can be a single-rod cylinder and can comprise a rod-locking element which allows the proximal portion 311 to maintain the position reached after the motion of the second actuator 321.

On this regard, it can comprise a third end **321a** hinged to the hooking portion 34 and a fourth end **321b** opposite to the third end **321a**, housed in a slot **311a**. Inside the slot 311a, the fourth end 321b can slide when the cylinder lengthens or shortens. In this way, the fourth end 321b housed in the slot 311a moves the proximal portion 311 so that it rotates with respect to the hinge which constraints it to the hooking portion 34. The rotation motion of the proximal portion 311 makes that the sweeping element 30 could vary its own distance from the ground.

In some embodiments of the sweeping machine 1 a stabilizing element may be present, constrained by springs respectively hinged in the ends respectively to the hooking portion 34 and to the proximal portion 311. The stabilizing element has the advantage of making that the proximal portion 311 maintains the reached position once the motion controlled by the second actuators 321 has been completed. Advantageously, the sweeping system 3, moreover, can comprise preferably a guide **33.**

The guide 33 is of known type and can comprise, for example, a bar with shaped profile so as to allow the sliding of the hooking portion 34. In detail, the guide 33 is integral to the frame 20 and develops along a guiding trajectory **33a.**

The guiding trajectory 33a defines the direction in which the hooking portion 34 can slide.

At least an arm 31 is preferably constrained unstably to the hooking portion 34 so as to be able to be moved along the guiding trajectory 33a. In some embodiments of the sweeping machine 1 the hooking portion 34 can be constrained to two arms 31 and the sliding of the hooking portion 34 with respect to the guide 33 involves the integral sliding of the two arms 31 when the hooking portion 34 is moved along the guiding trajectory 33a with respect to the frame 20.

In particular, the motion is preferably implemented through a pneumatic actuator 32. The latter then can comprise a through-rod cylinder **322.**

The through-rod cylinder 322 is preferably operatively connected to the guide 33. Therefore, the through-rod cylinder 322 is capable of sliding along the guiding trajectory 33a.

In some embodiments of the sweeping machine 1, the guide 33 can correspond to the rod of the through-rod cylinder 322. The body of the through-rod cylinder 322 can be integral to the hooking portion 34.

Moreover, the rod can be constrained to the frame 20. Then, thanks to the constraint with the through-rod cylinder 322, the arm 31 can be dragged along the guiding trajectory 33a with respect to the frame 20.

The through-rod cylinder 322, through the hooking portion 34, can be connected to a plurality of arms 31, each one connected to a sweeping element 30. In this case, the arms 31 can be simultaneously moved by the same through-rod cylinder 322. The sweeping machine 1 comprises a waste collection system **4.**

The waste collection system 4 is integral to the frame 20. It is preferably placed near the sweeping system 3.

The collection system 4, as it is known, allows to remove waste from the ground after being swept out by the sweeping system 4.

In the sweeping machine 1 the collection system 4 is preferably a suction collection system. The collection system 4 preferably comprises at least a pneumatic actuator 32 consisting of a third pneumatic actuator **323.** It can be a single-rod air cylinder. The third actuator 323 preferably develops along a translation axis **40a.** The translation axis 40a, in particular, is transversal, for example perpendicular, to the ground.

The collection system 4 preferably comprises a sucking mouth **40.**

The sucking mouth 40 is a tubular element with an opening directed towards the ground and it is suitable to suck the waste present on the ground; it is typically positioned downstream of the sweeping system 3 so that the waste swept out by sweeping system 3 is conveyed to the entrance of the sucking mouth 40.

### Mouth group

The sucking mouth 40 is preferably connected to the frame 20; in particular, it is connected to the frame 20 by a lifting lever **41.**

The lifting lever 41 is preferably a stiff bar of the known type and it is constrained to the frame 20 by a hinge defining a third rotation axis **41a** parallel to the ground. The sucking mouth 40 is constrained to the lifting lever 41 by a hooking structure **42.**

The hooking structure 42 is preferably a body configured to be constrained to the sucking mouth 40.

The lifting lever 41 is further constrained at its own free end **41b** to the hooking structure 42. Moreover, the lifting lever 41 is connected to a motion element **41c** arranged between the hinge and the hooking structure 42.

The motion element 41c is a structure hooked to the lifting lever 41.

In particular, the motion element 41c is integral to the lifting lever 41 and it is constrained to a motion device **43.**

The motion device 43 is a mechanical element capable of implementing the lever lifting motion.

The hooking structure 42 preferably comprises a sliding housing **420** for the sucking mouth 40.

The sliding housing 420 is suitable to contain the sucking mouth 40 and to make it to slide inside thereof, preferably along the translation axis 40a.

The hooking structure 42 further preferably comprises at least a supporting wheel **421.**

The supporting wheel 421 is preferably placed in the portion of the hooking structure 42 nearest to the ground and configured to contact the ground.

In a possible configuration the hooking structure can comprise a first supporting wheel 421 hooked in the lower portion of the hooking structure 42 and a second supporting wheel 421 hooked to a protruding portion of the supporting structure 42 and aligned to the lifting lever 41.

The third actuator 323 is constrained in a fifth end **323a** to the hooking structure 42 and in a sixth end **323b,** opposite to the fifth end 323a, to the sucking mouth 40.

In this way the third actuator 323 connects the sucking mouth 40 to the hooking structure 42 and implements the motion of the sucking mouth 40 inside the sliding housing 420.

The lifting lever 41 is configured to be moved by the motion device 43 so as to implement a rotation around the third rotation axis 41a and consequently to implement a lifting of the hooking structure 42 and of the sucking mouth 40.

The lifting of the sucking mouth 40 is advantageous when the collection system 4 is not used.

The lifting of the hooking structure 42 and of the sucking mouth 40 is then facilitated by the fact of being placed at the free end 41b of the lifting lever 41.

Moreover, as already said, the translation motion of the sucking mouth 40 along the translation axis 40a allows to adjust the distance from the ground of the sucking mouth, so as to optimize the sucking action under the different operating conditions. The sweeping machine 1 comprises a waste containment chamber **5** connected to the collection system 4 and it is suitable to contain the collected waste.

The chamber 5 is of known type and it is constrained to the frame of the vehicle 2. The chamber 5 is connected to the collection system 4; the connection between the chamber 5 and the collection system 4 can be performed by pipes connected to the sucking mouth 40. The waste is preferably conveyed inside the chamber 5 and unloaded with an unloading procedure performed by means of the opening of a door.

Advantageously, in the sweeping machine 1 each pneumatic actuator 32 is preferably controlled by an electronic control system **7.** The electronic control system 7 preferably can be actuated by an operator.

The electronic control system 7 sends electronic signals which allow to control preferably the actuation of the single pneumatic actuators 32 independently.

The electronic control system 7 preferably comprises an interface which allows an operator to control the single pneumatic actuators 32.

For example, the electronic control system 7 can be set so as to maintain the sweeping elements 30 at a constant distance from the ground. On this regard, the electronic control system 7 can be operatively connected to the electronic control unit 223. Therefore, a synergic adjustment of the distance of each sweeping element 30 from the ground is possible, in combination with the positioning and the slope of each sweeping element 30 depending upon how the pneumatic actuators 32 are adjusted.

Advantageously, in the sweeping machine 1 at least a sweeping element 30 is preferably constrained to the frame 2 by repositioning means **6.** It is means configured to vary the reference position 3a when it is placed at a value of distance from the frame 20 exceeding a predetermined value, so that said distance has at most a value equal to the predetermined value.

In some embodiments of the sweeping machine 1, the repositioning means 6 can comprise at least a spring. For these implementations, the repositioning takes place by means of the elastic restoring force applied to the sweeping element 30. In fact, when the force applied to the spring exceeds the resulting one of the forces applied to the sweeping element 30 by at least a pneumatic actuator 32. In detail, the repositioning means 6 can be springs hinged in one end to the sweeping element 30 and in the opposite end to the frame 20. The return means 6 has the advantage of bringing the sweeping elements 30 back in position when they are subjected to a collision during the path of the sweeping machine 1. For example, they can be brought to a position 3a nearest to the frame 20 so as to reduce the risk of damages. The sweeping machine 1 can comprise protective boxes or barriers for the containment of the electrovalves 222. Additional protective barriers for moving elements and components of the engines of the sweeping elements 30 can be present.

The operation of the previously described sweeping machine 1 in structural terms is the following.

The sweeping machine 1, by the sweeping system 3 transports the waste from the road ground and conveys it towards the entrance of the collection system 4. In detail the sweeping elements 30 perform the function of transporting the waste and of conveying it towards the sucking mouth 40. Once conveyed inside the collection system 4, the waste is stored inside the chamber 5. The sweeping machine 1 performs also the function of moving the sweeping elements 30 with slopes with respect to the longitudinal axis 2a or with respect to the axes transversal to the longitudinal axis 2a. The motions performed by the sweeping elements 30 are the adjustment of the distance from the ground, rolling and pitching motions and the translation with respect to the reference position 3a.

In the configurations in which there is the guide 33, the sweeping elements 30 can be made to translate with respect to the guiding trajectory 33a, which can have slope different from the longitudinal axis 2a and are controlled by the corresponding through-rod cylinder 322.

The pneumatic actuators 32 can be controlled by the control system 7.

Moreover, the suspensions 22 allow to adjust the distance from the ground of the frame 20. In particular, in response to the value read by the angular sensors 24 of the slope of the frame 20 with respect to the ground, the compressor 221 adjusts the air pressure inside the single air springs so as to make the slope of the frame 20 to vary and to bring it at a predetermined value. Consequently, even the sweeping elements 30 can be brought at a predetermined distance from the ground. The sweeping machine 1 according to the invention achieves important advantages. In fact, the sweeping machine 1 has the advantage of being able to move the sweeping elements 30 with floating motions, by combining different rotation and translation motions. These motions improve the efficiency of the sweeping system 3 and make it more adaptable to different environments and different conditions of the road ground.

Another advantage lies in the use of the pneumatic actuators 32, that is the pneumatic cylinders, which implement the required motions. In fact, the use of these devices guarantees a reduced risk for the environment in case of breakages and damages, since for their operation they do not use oil, but compressed air.

The use of this kind of devices guarantees, moreover, a greater ease of installation and maintenance of the sweeping machine 1.

An additional advantage of the sweeping machine, the invention relates to, is the use of pneumatic suspensions 22, which improves the efficiency of dampening collisions, by improving the conditions and safety for the operators.

In fact, the pneumatic suspensions 22, in combination with the electronic control system 7, constitute a system for controlling the position horizontality. The advantages of this control system is keep in position all sensitive parts of the sweeping machine 1. For example, by keeping in position the driver's cab, an improvement in the ergonomics for the driver is obtained; the stabilized horizontal position of the chamber 5 guarantees a homogeneous distribution of the sucked materials by preventing accumulations deriving from a missed horizontality; the horizontal position, moreover, guarantees to maintain the levels of the liquid tanks, by avoiding slopes of the planes which can lead to wrong reading of the levels by the sensors.

The invention may be subject to variants within the scope of the inventive concept defined by the claims.

Within such scope, all details can be replaced by equivalent elements and the materials, shapes and sizes can be any.

## Claims

1. A sweeping machine (1) comprising:
- a vehicle (2) defining a longitudinal axis (2a) parallel to the direction of travel of said vehicle (2) on the ground and comprising at least:
- a supporting frame (20),
- motion means (21) constrained unstably to said frame (20) and configured to drive the motion of said vehicle (2) with respect to said ground,
- a sweeping system (3) connected to said frame (20), suitable to remove the waste present on said ground and comprising:
- at least a sweeping element (30) suitable to move said waste from the ground and defining a reference position (3a) with respect to said frame (20),
- at least a connecting arm (31) for each said at least a sweeping element (30) suitable to connect said at least a sweeping element (30) to said vehicle (2),
- a system (40) for collecting said waste integral to said frame (20) and placed near said sweeping system (3),
- a chamber (5) for containing said waste connected to said collection system (4) and suitable to contain said waste, and
- **characterized in that** said sweeping system (3) further comprises at least a controlled electronically pneumatic actuator (32), suitable to move said at least a sweeping element (30) so as to modify said reference position (3a) with respect to said frame (20), and constituting at least part of said at least an arm (31) so as to be able to modify the extension of said arm (31).

2. The sweeping machine (1) according to claim 1, wherein said arm (31) defines a proximal portion (311) connected to said vehicle (2), a distal portion (310) hinged to said proximal portion (311) and constrained integrally at least to said sweeping element (30) and comprises a plurality of pneumatic actuators (32), said pneumatic actuators (32) comprising at least a first pneumatic actuator (320) constrained to said distal portion (310), said first actuator (320) being configured to vary the slope of at least said sweeping element (30) with respect to a direction transversal to said longitudinal axis (2a).

3. The sweeping machine (1) according to any one of the preceding claims, wherein said at least a pneumatic actuator (32) comprises a second actuator (321) developing transversally to said ground and configured to vary said reference position (3a) with respect to said frame (20) transversally to said ground so as to adjust the distance of said at least a sweeping element (30) with respect to said ground.

4. The sweeping machine (1) according to the preceding claim, wherein said proximal portion (311) comprises said second actuator (321).

5. The sweeping machine (1) according to any one of the preceding claims, wherein said sweeping system (3) comprises a guide (33) integral to said frame (20) and developing along a guiding trajectory (33a), said pneumatic actuator (32) comprises a through-rod cylinder (322) operatively connected to said guide (33), capable of sliding along said guiding trajectory (33a) and constrained to said at least an arm (31), so as to drag in its motion said at least an arm (31) with respect to said frame (20).

6. The sweeping machine (1) according to any one of the preceding claims, wherein said collection system (4) is of suction type and comprises at least said pneumatic actuator (32) consisting of a third pneumatic actuator (323) parallel to a translation axis (40a) transversal to said ground and a sucking mouth (40) connected to said frame (20) by a lifting lever (41) and a hooking structure (42); said lifting lever (41) being constrained to said frame (20) by a hinge defining a first rotation axis (41a) parallel to said ground, and being further constrained at its own free end (41b) to said hooking structure (42) and to a motion element (41c) arranged between said hinge and said hooking structure (42), integral to said lifting lever (41) and constrained to a motion device (43); said hooking structure (42) comprising a sliding housing (420) for said sucking mouth (40) and at least a supporting wheel (421), placed in the portion of said hooking structure (42) nearest to said ground and configured to contact said ground; said third actuator (323) being constrained in a fifth end (323a) to said hooking structure (42) and in a sixth end (323b), opposite to said fifth end (323a), to said sucking mouth (40); said lifting lever (41) being configured to be moved by said motion device (43) so as to implement a rotation around said first rotation axis (41a) and consequently to implement a lifting of said hooking structure (42) and of said sucking mouth (40); said third actuator (323) being configured to move said sucking mouth (40) along said translation axis (40a) so as to implement a translation motion of said sucking mouth (40).

7. The sweeping machine (1) according to any one of the preceding claims, wherein said motion means (21) comprises at least two axles (210) each one connected to said frame (20) and including two wheels (211) and said vehicle (2) further comprises a plurality of self-levelling pneumatic suspensions for each said wheel (211), each one thereof arranged between said frame (20) and said axle (210) and configured to reduce the transmission of vibrations deriving from the motion of said vehicle (2) transmitted by said axles (210) to said frame (20).

8. The sweeping machine (1) according to the preceding claim, wherein said plurality of suspensions (22) comprises angular position sensors (24) configured to measure the slope of said frame (20) with respect to said ground and said plurality of suspensions (22) is further configured to vary said slope in response to the measured value of said slope, so that said measured value varies until the predetermined value.

9. The sweeping machine (1) according to any preceding claim, wherein at least said sweeping element (30) is constrained to said frame (2) by repositioning means (6) configured to vary said reference position (3a), when said reference position (3a) is placed at a value of distance from said frame (20) exceeding a predetermined value, so that said distance has at most a value equal to said predetermined value.

10. The sweeping machine (1) according to any preceding claim, wherein said vehicle (2) comprises a cockpit (23) suitable to contain an operator's driving position.

11. The sweeping machine (1) according to any preceding claim, wherein said at least a pneumatic actuator (32) is controlled by an electronic control system (7) which can be actuated by an operator.
